# EUROPÄISCHE PATENTSCHRIFT

(11) **EP 0 575 921 B1**
(45) Veröffentlichungstag und Bekanntmachung des Hinweises auf die Patenterteilung: **25.09.1996**
(21) Anmeldenummer: 93109821.4
(22) Anmeldetag: 19.06.1993
(51) Int. Cl.: H01M 10/39, C04B 35/10

(54) **Verfahren und Vorrichtung zum Herstellen eines topfförmigen Körpers aus einem Pulvergemisch aus Oxidkeramik**
Process and device for manufacturing a cup-shaped body from a mixture of ceramic oxide powders
Procédé et appareil pour la fabrication de godets à partir d'un mélange de poudres d'oxydes céramiques

(30) Priorität: 25.06.1992 DE 4220768
(43) Veröffentlichungstag der Anmeldung: 29.12.1993
(73) Patentinhaber: NUKEM GmbH, D-63755 Alzenau (DE)
(72) Erfinder: Hrovat, Milan, Dr., D-6458 Rodenbach (DE); Porth, Heinrich, D-6450 Hanau 8 (DE)
(74) Vertreter: Stoffregen, Hans-Herbert, Dr. Dipl.-Phys.

(56) Entgegenhaltungen:
- EP-A- 0 439 949
- DE-A- 2 738 413
- FR-A- 2 626 267
- GB-A- 2 210 612
- DATABASE WPI Week 9123, Derwent Publications Ltd., London, GB; AN 91-165330 & DE-A-4 037 258 (ASEA BROWN BOVERI A.G.) 29. Mai 1991

## Beschreibung

Die Erfindung bezieht sich auf ein Verfahren zum Herstellen eines topfförmigen Körpers aus einem Pulvergemisch aus Oxidkeramik, insbesondere eines einseitig geschlossenen hohlzylindrischen Körpers aus β''-Aluminiumoxid (β''-Al₂O₃) als Feststoffelektrolyten für insbesondere eine Natrium-Schwefel-Batterie, wobei das Pulvergemisch in einen den Körper vorgebenden, zwischen einem Hohlraum einer Matrize und einem in diesen hineinragenden Kern gebildeten Zwischenraum gefüllt, sodann druckbeaufschlagt und nach Entfernen aus der Matrize gesintert wird.

Insbesondere bezieht sich die Erfindung auf ein Verfahren zur Herstellung eines einseitig geschlossenen hohlzylindrischen Körpers aus β''-Aluminiumoxid (β''-Al₂O₃) als Feststoffelektrolyten für insbesondere eine Natrium-Schwefel-Batterie. Auch bezieht sich die Erfindung auf eine Vorrichtung zur Herstellung eines topfförmigen Körpers aus einem Pulvergemisch als keramischen Feststoffelektrolyten für eine Batterie.

Der Bedarfan leistungsfähigen elektrochemischen Energiespeichern nimmt insbesondere vor dem Hintergrund zu, daß zur Bewältigung von Umweltproblemen die Benutzung von elektrischen Straßenfahrzeugen erforderlich wird. Bei den elektrochemischen Elementen haben sich in der Vergangenheit Blei/Säure-Batterien und in geringem Umfang Nickel/Cadmium-Batterien durchgesetzt. Erstere zeigen einen hohen Entwicklungsstand, gleichwenn eine Verwendung in wichtigen Bereichen aufgrund ihres hohen Gewichtes und des großen Wartungsbedarfs nicht möglich ist. Daher ist der Einsatz in elektrischen Straßenfahrzeugen nicht praktikabel.

Die vorbekannten Nachteile können mit einer Natrium-Schwefel-Batterie ausgeräumt werden, die sich grundlegend von den konventionellen Akkumulatoren unterscheidet. So besitzt die Natrium-Schwefel-Batterie (Na/S-Batterie) flüssige Reaktanten und einen festen Elektrolyten.

Für die Funktion der Zelle sind geschmolzenes Natrium als die eine und geschmolzener Schwefel als die andere Reaktionssubstanz sowie ein die beiden Reaktionspartner trennender Festelektrolyt erforderlich. Dieser Festelektrolyt keramischen Werkstoffs hat die Eigenschaft, Natriumionen zu leiten, Elektronen jedoch nicht. Der Elektrolyt hat grundsätzlich die Form eines einseitig geschlossenen Zylinders oder Tiegels, in dessen Innerem sich das Natrium und außen der Schwefel befindet. Da letzterer auch im geschmolzenen Zustand ein Nichtleiter ist, kann der Schwefel in einen elektrisch leitenden Kohlefilz eingebracht werden. Dieser bildet die Fortsetzung des als positiver Stromanschluß dienenden Metallgehäuses der Zelle und sorgt mit seiner großen Oberfläche dafür, daß die elektrochemischen Prozesse genügend schnell ablaufen. Als negativer Stromanschluß dient ein mit dem Natrium in Kontakt stehender metallischer Deckel. Bei der Entladung, also dann, wenn die Stromanschlüsse über eine Last miteinander verbunden sind, wandern Natriumionen durch den Festelektrolyten zum Schwefel. Dabei reagieren die Natriumionen mit Schwefel unter Aufnahme von Elektronen zu Natriumpolysulfid. Der dem Natriumstrom entsprechende Elektronenstrom fließt über die äußere Last.

Der Wiederaufladung der Zelle wird eine äußere Stromquelle angeschlossen, deren Spannung größer ist als die Ruhespannung der Zelle. Nach dem Anlegen der Ladespannung fließt ein Ladestrom. Das Reaktionsprodukt Natriumpolysulfid wird versetzt, die Natriumionen wandern durch den Festelektrolyten zurück in den Innenraum und Schwefel bleibt im Außenraum zurück.

Entsprechende Na/S-Batterien werden in Modulen zusammengefaßt, aus denen eine komplette Batteriebestückung zusammengestellt wird. Durch Reihen- und Parallelschaltung der Zellen läßt sich die gewünschte Klemmenspannung erreichen. Entsprechende Batteriemodule können bei kompaktem Aufbau eine Kapazität von 180 Ah mit einer Leerlaufspannung von 200 V bis 170 V aufweisen.

Probleme mit entsprechenden Na/S-Batterien ergeben sich jedoch bei der Herstellung des topf- oder tiegelförmigen Festelektrolyten. So können diese durch isostatisches Pressen in einer Flüssigkeit hergestellt werden. Nachteilig ist, daß keine hohen Taktzeiten bei der Herstellung durch zu verwendende Autoklaven bzw. die Einkapselung des Werkzeuges erzielt werden können.

Auch ist es bekannt, entsprechende Körper durch Elektrophorese herzustellen. Durch fehlende Gleichmäßigkeit der Konzentration, lange Trocknerzeiten sowie eine große Streubreite der Wanddicke bereitet es jedoch Probleme, reproduzierbare Tiegel in Massenproduktion herstellen.

Ganz allgemein ist es bekannt, keramische Formkörper durch Druckbeaufschlagung von keramischen Stoffen auszubilden, die in einen Fließeigenschaften aufweisenden Formblock eingebracht werden. Dabei erfolgt eine Druckbeaufschlagung von außen nach innen. Beispielhaft sei auf die DE 693 504, DE 604 691, FR-A 2 190 046, GB 2 219 549 A, US 4 097 977, US 4 496 299 verwiesen. Formkörper aus Oxidkeramik können auch durch Elektrophorese (DE 38 01 328 A1), Extrudieren (US 4 615 851) oder durch isostatisches Pressen (US 3 832 103 bzw. Literaturstellen "Sprechsaal", Vol. 123, No. 4, 1990, Seiten 397 bis 402 bzw. "Sprechsaal", Vol. 123, No. 8, 1990, Seiten 759 bis 763) hergestellt werden. Die Herstellung rohrförmiger Körper ist aus der US 3 184 528 bekannt.

Die EP 0 439 949 A1 bezieht sich auf ein Verfahren zum Herstellen von β"-Aluminiumoxid, welches in einem gewissen Umfang Natriumaluminat enthält, das jedoch bei Verwendung von β"-Aluminiumoxid Feststoffelektrolyten unerwünscht ist, da es eine amorphe Phase darstellt.

Aus der GB 2 210 612 A ist ein Elektrolyt aus β"-Aluminiumoxid bekannt, ohne daß spezielle Formgebungsverfahren zur Herstellung des Elektrolyten angesprochen sind.

In der DE 27 38 413 A1 werden einerseits besondere Zusammensetzungen von Elektrolytmaterial aus β"-Aluminiumoxid und andererseits Vorschläge zum Herstellen eines Grünlings beschrieben. Dabei wird auf ein isostatisches Verpressen eingegangen, das nach dem Stand der Technik von außen nach innen erfolgt.

Die FR-A-2 626 267 beziehungsweise GB 2 214 174 A bezieht sich auf die Dotierung β"-Aluminiumoxidpresspulver, ohne daß eine Bezugnahme zu einem Formgebungsverfahren erfolgt.

Es ist Aufgabe der vorliegenden Erfindung, ein Verfahren und eine Vorrichtung der eingangs genannten Art so weiterzubilden, daß mit technisch einfachen Mitteln topfförmige Körper, insbesondere Körper aus keramischem Festelektrolyten mit einer Wandstärke mit vorzugsweise kleiner als 1,8 mm reproduzierbar und in vorgegebenen Toleranzbereichen herstellbar sind.

Das Problem wird erfindungsgemäß im wesentlichen dadurch gelöst, daß ein isotropes Granulat als Pulvergemisch verwendet wird, das vom Kern von innen nach außen semi-isostatisch verdichtet wird, wobei das Pulvergemisch axial und radial isotrop oder im wesentlichen isotrop verdichtet wird.

Semi-isostatisch bedeutet dabei, daß der Kern bis zu einem von dem Material abhängigen Druck zunächst verformbar ist, um sodann oberhalb des Druckes ein Verhalten wie eine Flüssigkeit zu zeigen. Hierdurch erfolgt die notwendige Verdichtung und Formgebung des Pulvergemischs zu einem topfförmigen Körper mit gewünschter Wandstärke.

Abweichend vom vorbekannten Stand der Technik erfolgt also eine Druckeinleitung von innen nach außen, ohne daß ein Verkapseln oder die Verwendung von Autoklaven erforderlich ist.

Diese Druckeinleitung und Formgebung erfolgt durch einen Kern aus einem elastischen Material wie Gummimaterial, das sich erwähntermaßen oberhalb eines Druckes P₁ druckmäßig wie eine Flüssigkeit verhält, wobei bei der Verwendung von Gummimaterial wie Silikonkautschuk der Druck P₁ nur größer als 50 bar ist.

Zur Sicherstellung der isotropen Verdichtung oder im wesentlichen isotrope sowohl in axialer als auch radialer Richtung ist vorgesehen, daß das Pulvergemisch außenseitig von einer bei Druckbeaufschlagung in den Hohlraum sich bewegenden Platte abgedeckt ist.

Ferner ist das den Körper umgebende Werkzeugteil wie Matrize oder Matrizeneinsatz mehrteilig ausgebildet, um ein leichtes Entfernen des als Grünling zu bezeichnenden ausgeformten Körpers sicherzustellen.

Insbesondere bezieht sich die Erfindung auf ein Verfahren zur Herstellung eines einseitig geschlossenen hohlzylindrischen Körpers aus β"-Aluminiumoxid als Feststoffelektrolyten für insbesondere eine Natrium-Schwefel-Batterie, wobei ein Pulvergemisch in einen den Körper vorgebenden, zwischen einem Hohlraum einer Matrize und einem in diesen hineinragenden Kern gebildeten Zwischenraum gefüllt, sodann druckbeaufschlagt und nach Entfernen aus der Matrize gesintert wird, wobei zumindest Al₂O₃ und Na₂CO₃ enthaltendes Pulvergemisch homogenisiert, kalziniert, gemahlen und sodann in den Zwischenraum gefüllt wird, und zeichnet sich dadurch aus, daß das Pulvergemisch axial und radial von innen nach außen im wesentlichen isotrop verdichtet wird, daß nach Entlasten des Kernes die Matrize von dem als Grünling ausgebildeten Gemisch entfernt und schließlich der Grünling gesintert wird. Dabei wird vorzugsweise das Gemisch mit einem Druck P₂ mit 80 MPa ≤ P₂ ≤ 300 NPa beaufschlagt.

Der Grünling selbst wird vorzugsweise bei einer Temperatur T₁ mit T₁ ≤ 1.650° C gesintert.

Um einen Gewichtsanteil von β-Al₂O₃ (β-Al₂O₃ und β"-Al₂O₃) des auszuformenden Gemisches in einem Bereich von über 90 % zu erreichen, wird das kalzinierte Pulvergemisch zunächst naß aufgemahlen, sodann getrocknet und schließlich erneut gemahlen, um schließlich in den Zwischenraum eingefüllt zu werden.

Eine Vorrichtung zur Herstellung eines topfförmigen Körpers aus einem Pulvergemisch als keramischen Festelektrolyten für eine Batterie, insbesondere eines einseitig geschlossenen hohlzylindrischen Körpers aus β''-Aluminiumoxid als Feststoffelektrolyten für insbesondere eine Natrium-Schwefel-Batterie, wobei ein Pulvergemisch in einen den Körper vorgebenden zwischen einem Hohlraum und einer Matrize und einem in diesen hineinragenden Kern gebildeten Zwischenraum füllbar ist und sodann das in den Zwischenraum eingebrachte Pulvergemisch durch Relativbewegung vom Kern und Matrize formbar ist, zeichnet sich dadurch aus, daß der Kern aus einem elastischen Material besteht, der sich oberhalb eines Druckes P₁ druckmäßig wie eine Flüssigkeit verhält, daß die Matrize mehrteilig ausgebildet ist oder in dieser ein den Hohlraum begrenzender mehrteiliger Einsatz angeordnet ist, wobei der Kern von einem in axialer Richtung des Hohlraums verschiebbaren Stempel ausgeht. Dabei kann der Kern mit dem vorzugsweise aus Stahl bestehenden Stempel z.B. über Schrauben verbunden sein.

In weiterer Ausgestaltung ist der Stempel gegenüber der Matrize über Federelemente abgestützt, um auf einfache Weise den Stempel und damit den Kern aus dem ausgeformten Pulvergemisch, das auch als Grünling zu bezeichnen ist, zurückziehen zu können.

Der Hohlraum selbst ist von einer Platte abgedeckt, auf die ein Plattenelement gelegt wird, das sich zumindest bereichsweise über den Einsatz erstreckt und durch das bei Druckbeaufschlagung die Platte derart in den Zwischenraum gedrückt wird, daß seine Außenseite mit der Oberseite des Einsatzes fluchtet.

Um eine gleichmäßige Wandstärke des Grünlings und damit des Endproduktes zu erreichen, kann sich der Kern in Richtung seiner freien Stirnfläche verjüngen. Hierdurch wird der Tatsache Rechnung getragen, daß sich der Kern zunächst axial verformen läßt, bevor er isostatische Eigenschaften zeigt.

Weitere Einzelheiten, Vorteile und Merkmale der Erfindung ergeben sich nicht nur aus den Ansprüchen, den diesen zu entnehmenden Merkrnalen - für sich und/oder in Kombination -, sondern auch aus der nachfolgenden Beschreibung der Zeichnung sowie eines Herstellungsbeispiels.

Es zeigen:
- Fig. 1: eine prinzipielle Anordnung eines Werkzeuges zum Herstellen von einem topfförmigen Körper nach dem Befüllen,
- Fig. 2: das Werkzeug nach Fig. 1 bei Druckbeaufschlagung und
- Fig. 3: das Werkzeug nach Fig. 1 und Fig. 2 nach Ausformung des Körpers.

Um einen topf- oder tiegelförmigen Festelektrolyten bestimmt für eine Natrium-Schwefel-Batterie herzustellen, wurde ein Gemisch aus 1.200 g Al₂O₃ der Qualität mit der Kennzeichnung HBA-05AF der Firma Condea, Hamburg, Deutschland, 205 g dehydriertem handelsüblichem Na₂CO₃, 28,9 g handelsüblichem LiOH als Monohydrat und 2,44 g ZrO₂ der Qualität TZ-3Y der Firma TOYO SODA, Japan, homogenisiert und bei ca. 1.300° C kalziniert. Nach der Kalzination ergab sich ein Pulver bestehend aus 90 Gew% β"-Al₂O₃, 5 Gew% α-Al₂O₃ und 5 Gew% NaAlO₂. Das kalzinierte Pulvergemisch wurde sodann in einer Attritormühle 8 Stunden naß aufgemahlen, um eine mittlere Korngröße von 1,2 µm zu erzielen. Nach dem Abtrennen der Mahlkugeln von der entstandenen Emulsion wurde letztere bei 105° C getrocknet und anschließend erneut gemahlen. Dieses Pulvergemisch wurde sodann zum Ausformen in ein Werkzeug eingebracht, daß rein prinzipiell der Zeichnung zu entnehmen ist.

Das Werkzeug besteht aus einer Matrize (10) mit einem mehrteiligen Einsatz (12), der einen Hohlraum (13) begrenzt. In den Hohlraum (13) erstreckt sich ein aus elastischem Material wie Gummi bestehender Kern (14), der von einem Stempel (16) ausgeht und mit diesem vorzugsweise verschraubt oder in anderer geeigneter Weise verbunden ist. Der aus Stahl bestehende Stempel (16) geht von einer Basisplatte (18) aus, die im Ausführungsbeispiel über Federelemente (20), die auch als Stempelrückzugfedern zu bezeichnen sind, gegenüber der Matrize (10) abgestützt ist.

Der Kern (14) verläuft beabstandet zur Innenfläche des Einsatzes (12) und zur Stirnfläche (22) des Werkzeuges, also der Matrize (10) bzw. des Einsatzes (12). Zwischen dem Einsatz (12), dem Kern (14) und der Stirnfläche (22) bildet sich folglich ein Zwischenraum (24) aus, der mit dem zuvor beschriebenen Pulvergemisch ausgefüllt wurde.

Nach Ausfüllen des Zwischenraums (24) wird auf das Pulvergemisch eine Platte (23) gelegt, die bei Druckbeaufschlagung in den von dem Einsatz (12) umgebenden Bereich bewegt wird. Sodann werden die Platte (23) und der Einsatz (12) stirnseitig von einer Jochplatte (26) abgedeckt, um sodann einen Pressvorgang einzuleiten, bei dem der Stempel (16) axial in den Hohlraum (13) von innen her und die Platte (23) von außen her verschoben werden, um auf diese Weise das in den Zwischenraum (24) eingefüllte Pulvergemisch zu einem Grünling (28) auszuformen.

Da der aus elastischem Material wie Gummi bestehende Stempel (14) oberhalb eines Druckes - bei der Verwendung von Silikonkautschuk oberhalb von 50 bar - nicht mehr nur axial verformbar ist, sondern sich isostatisch, also wie eine Flüssigkeit verhält, ist der Kern (14) gegenüber dem Stempel (16) umfangsseitig abgedichtet Hierzu kann eine umlaufende Dichtung vorgesehen sein.

Bevor der Stempel (16) mit der erforderlichen Presskraft beaufschlagt wurde - im vorliegenden Beispiel betrug die Presskraft 10 Tonnen - wird der Zwischenraum (24) evakuiert.

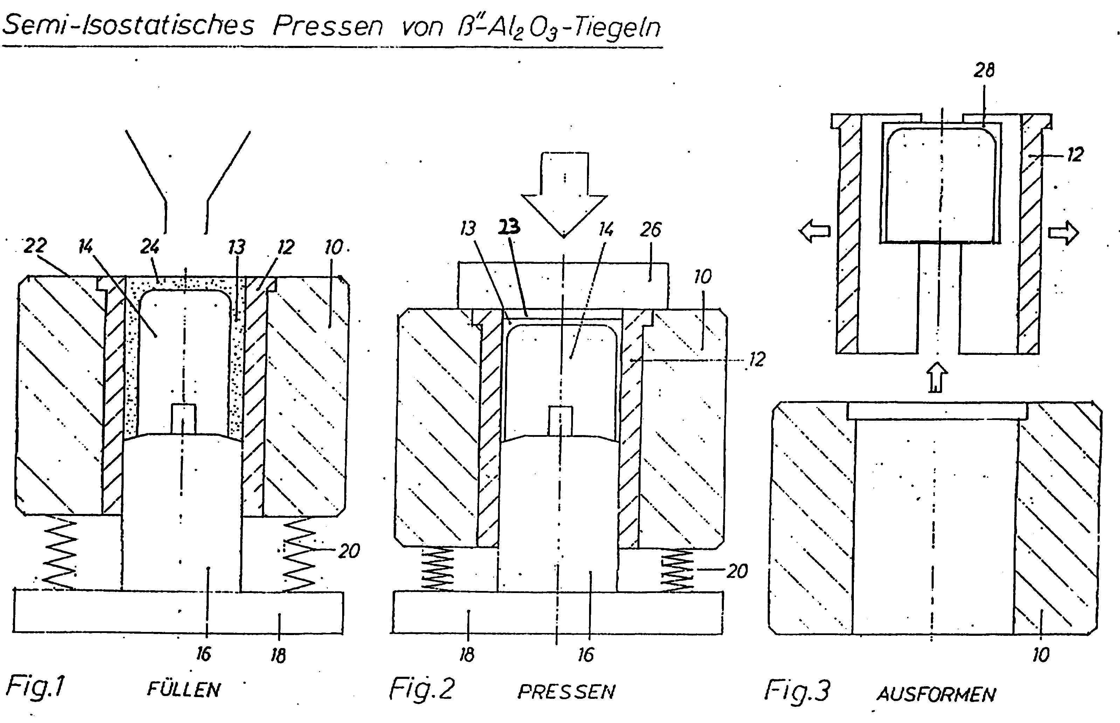

Nachdem das Gemisch zum Grünling (28) ausgeformt war, wurde der Stempel (16) entlastet Hierbei blieb jedoch die Jochplatte (26) auf der Stirnfläche (22) so lange ruhen, bis der Stempel (14) zum Boden (30) beabstandet war. Sodann wurde der Einsatz (12) aus der Matrize (10) entfernt und die Teile des Einsatzes radial auseinandergefahren (Fig. 3). Hierdurch erfolgte eine umfangsseitige Entspannung, die sicherstellt, daß der Grünling (28) ohne Beschädigung entnommen werden kann. Zuvor wurde die Platte (23) entfernt.

Der Grünling (28) hatte dabei die Abmessung: Höhe 29,4 mm, Außendurchmesser 39 mm und Wandstärke 1,5 mm.

Anschließend wurde der Grünling (28) über einen Zeitraum von 18 Stunden bei einer Temperatur von ca. 1.625° C gesintert.

Beim Sintern wurde eine isotrope Schrumpfung (axial und radial) von 17,9 % festgestellt. Die Dichte des fertigen Körpers betrug 3,25 g/cm³ bzw. 98,5 % der theoretischen Dichte.

Eine Röntgenstrukturanalyse hat ergeben, daß der Anteil an β"-Al₂O₃ 98% betrug. Die Mikrostruktur wies eine gleichmäßige Kornverteilung von etwa 2 µm auf.

Selbstverständlich ist die erfindungsgemäße Lehre nicht auf eine Na/S-Batterie beschränkt. Eine Anwendung z.B. auf eine Lithium/Schwefel-Batterie ist gleichfalls möglich. Auch ist die Herstellung von Hohlzylinder aus anderen Pulvergemischen aus Oxidkeramik wie Magnesiumoxid, α-Aluminiumoxid oder Zirkonoxid gleichfalls möglich.

## Patentansprüche

1. Verfahren zum Herstellen eines topfförmigen Körpers (28) aus einem Pulvergemisch aus Oxidkeramik, insbesondere eines einseitig geschlossenen hohlzylindrischen Körpers aus β"-Aluminiumoxid (β"-Al₂O₃) als Feststoffelektrolyten für insbesondere eine Natrium-Schwefel-Batterie, wobei das Pulvergemisch in einen den Körper vorgebenden, zwischen einem Hohlraum (13) einer Matrize (10) und einem in diesen hineinragenden Kern (14) gebildeten Zwischenraum (24) gefüllt, sodann druckbeaufschlagt und nach Entfernen aus der Matrize gesintert wird,
**dadurch gekennzeichnet,**
daß ein isotropes Granulat als Pulvergemisch verwendet wird, das vom Kern (14) von innen nach außen semi-isostatisch verdichtet wird.

2. Verfahren nach Anspruch 1,
**dadurch gekennzeichnet,**
daß das Pulvergemisch axial und radial isotrop oder im wesentlichen isotrop verdichtet wird.

3. Verfahren nach Anspruch 1,
**dadurch gekennzeichnet,**
daß als Material für den Kern ein elastisches Material wie Gummimaterial verwendet wird, das sich oberhalb eines Druckes P₁ druckmäßig wie eine Flüssigkeit verhält, wobei vorzugsweise der Druck P₁ größer 50 bar ist.

4. Verfahren nach zumindest einem der vorhergehenden Ansprüche,
**dadurch gekennzeichnet,**
daß der ausgebildete hohlzylindrische Körper (Grünling) (28) an seiner Bodenfläche außenseitig so lange abgestützt wird, bis der Kern (14) zur Innenseite der Bodenfläche beabstandet worden ist.

5. Verfahren zur Herstellung eines einseitig geschlossenen hohlzylindrischen Körpers (28) aus β"-Aluminiumoxid als Feststoffelektrolyten für insbesondere eine Natrium-Schwefel-Batterie, wobei ein Pulvergemisch in einen den Körper vorgebenden zwischen einem Hohlraum (13) einer Matrize (10) und einem in diesen hineinragenden Kern (14) gebildeten Zwischenraum (24) gefüllt, sodann druckbeaufschlagt und nach Entfernen aus der Matrize gesintert wird, wobei zumindest Al₂O₃ und Na₂CO₃ enthaltendes Pulvergemisch homogenisiert, kalziniert, gemahlen und sodann in den Zwischenraum (24) gefüllt wird, **dadurch gekennzeichnet,** daß das Pulvergemisch axial und radial von innen nach außen im wesentlichen isotrop verdichtet wird, daß nach Entlasten des Kerns die Matrize von dem als Grünling ausgebildeten Gemisch entfernt wird und daß schließlich der Grünling gesintert wird.

6. Verfahren nach zumindest einem der vorhergehenden Ansprüche,
**dadurch gekennzeichnet**,
daß das Pulvergemisch mit einem Druck P₂ mit 80 MPa ≤ P₂ ≤ 300 MPa beaufschlagt wird.

7. Verfahren nach zumindest einem der vorhergehenden Ansprüche,
**dadurch gekennzeichnet**,
daß der Grünling bei einer Temperatur T₁ mit T₁ ≤ 1.650° C gesintert wird.

8. Verfahren nach zumindest einem der vorhergehenden Ansprüche,
**dadurch gekennzeichnet**,
daß das Pulvergemisch zunächst naß aufgemahlen, sodann getrocknet und schließlich erneut gemahlen wird.

9. Vorrichtung zur Herstellung eines topfförmigen Körpers (28) aus einem Pulvergemisch aus Oxidkeramik, insbesondere eines einseitig geschlossenen hohlzylindrischen Körpers aus β''-Aluminiumoxid (β''-Al₂O₃) als Feststoffelektrolyten für insbesondere eine Natrium-Schwefel-Batterie, wobei ein Pulvergemisch in einen den Körper vorgebenden zwischen einem Hohlraum (13) und einer Matrize (10) und einem in diesen hineinragenden Kern (14) gebildeten Zwischenraum (24) füllbar ist und sodann das in den Zwischenraum eingebrachte Pulvergemisch durch Relativbewegung vom Kern und Matritze formbar ist,
**dadurch gekennzeichnet**,
daß der Kern (14) aus einem elastischen Material besteht, das sich oberhalb eines Druckes P₁ druckmäßig wie eine Flüssigkeit verhält,
daß die den Kern beabstandet umgebende Matritze (10) mehrteilig ausgebildet ist oder einen den Kern beabstandet umgebenden mehrteiligen Einsatz (12) aufweist und
daß der Kern von einem in axialer Richtung des Hohlraumes (13) verschiebbaren Stempel (16) ausgeht.

10. Vorrichtung nach Anspruch 9,
**dadurch gekennzeichnet**,
daß das Pulvergemisch außenseitig von einer bei Druckbeaufschlagung in den Hohlraum (13) hinein sich bewegenden Platte (23) abgedeckt ist und daß außenseitig auf der Platte (23) ein den Einsatz (12) zumindest abschnittsweise abdeckendes Plattenelement (26) angeordnet ist.

## Claims

1. Process for preparing a cup-shaped body (28) from an oxide ceramic powder mixture, especially a hollow cylindrical body that is open on one side made of β"-aluminium oxide (β"-Al₂O₃) for use as a solid electrolyte especially for a sodium-sulfur battery, wherein the powder mixture is filled into an intermediate space (24) which predetermines the body and is formed between a hollow space (13) of a mold (10) and a core (14) extending into it, after which pressure is applied to it, and it is sintered after removal from the mold,
**characterized in that**
an isotropic granular product is used as the powder mixture, which is compacted by the core (14) semiisostatically.

2. Process in accordance with Claim 1,
**characterized in that**
the powder mixture is compacted isotropically axially and radially or essentially isotropically.

3. Process in accordance with Claim 1,
**characterized in that**
an elastic material, such as rubber material, which behaves under pressure like a liquid above a pressure P₁, is used as the material for the core, and the pressure is preferably greater than 50 bar.

4. Process in accordance with at least one of the preceding Claims,
**characterized in that**
the hollow shaped cylindrical body (green compact) (28) is supported on its bottom surface on the outside until the core (14) has assumed a spaced location from the inside of the bottom surface.

5. Process for preparing a hollow cylindrical body (28) that is open on one side made of β"-aluminium oxide for use as a solid electrolyte especially for a sodium-sulfur battery, wherein a powder mixture is filled into an intermediate space (24) which predetermines the body and is formed between a hollow space (13) of a mold (10) and a core (14) extending into the said hollow space, after which pressure is applied to it, and it is sintered after removal from the mold, and powder mixture containing at least Al₂O₃ and Na₂CO₃ is homogenized, calcined, ground, and then filled into the intermediate space (24)
**characterized in that**
the powder mixture is compacted essentially isotropically axially and radially from the inside to the outside, that the mold is removed from the mixture shaped as a green compact after the core has been released, and that the green compact is finally sintered.

6. Process in accordance with at least one of the preceding Claims,
**characterized in that**
a pressure P₂ of 80 MPa ≤ P₂ ≤ 300 MPa is applied to the powder mixture.

7. Process in accordance with at least one of the preceding Claims,
**characterized in that**
the green compact is sintered at a temperature T₁ of T₁ ≤ 1,650°C.

8. Process in accordance with at least one of the preceding Claims,
**characterized in that**
the powder mixture is first subjected to wet grinding, then dried, and is finally ground again.

9. Device for preparing a cup-shaped body (28) from an oxide ceramic powder mixture, especially a hollow cylindrical body that is closed on one side made of β"-aluminium oxide (β"-Al₂O₃) for use as a solid electrolyte especially for a sodium-sulfur battery, wherein a powder mixture can be filled into an intermediate space (24) which predetermines the body and is formed between a hollow space (13) of a mold (10) and a core (14) extending into it, and the powder mixture introduced into the inter mediate space can then be shaped by relative movement of the core and mold,
**characterized in that**
the core (14) consists of an elastic material which behaves under pressure like a liquid above a pressure P₁;
the mold (10) surrounding the core at a spaced location is designed as a multi-component mold or has a multi-component insert (12) surrounding the core at a spaced location;
and the core originates from a plunger (16) which is displaceable in the axial direction of the hollow space (13).

10. Device in accordance with Claim 9,
**characterized in that**
the powder mixture is covered on the outside by a plate (23) which moves into the hollow space (13) during the application of pressure, and a plate element (26), which covers at least some of the area of the insert (12), is arranged on the plate (23) on the outside.

## Revendications

1. Procédé pour la fabrication d'un godet (28) à partir d'un mélange de poudre en oxydes de céramique, en particulier d'un godet sous forme d'un cylindre creux fermé à une extrémité en oxyde d'aluminium β", (Al₂ O₃ -β"), comme électrolyte solide pour, en particulier, une batterie au sodium/soufre, dans lequel le mélange de poudres est rempli dans un espace intermédiaire (24) formé entre une cavité (13) d'une matrice (10) et un noyau (14) saillant dans celui-ci, définissant le godet, puis est pressé et après évacuation de la matrice est fritté,
caractérisé en ce que
un granulé isotrope est utilisé comme mélange de poudres qui est compacté à partir du noyau (14), d'une manière semi-isostatique de l'intérieur vers l'extérieur.

2. Procédé selon la revendication 1,
caractérisé en ce que
le mélange de poudres est compacté axialement et d'une manière isotrope.

3. Procédé selon la revendication 1,
caractérisé en ce que
comme matériau pour le noyau, on utilise un matériau élastique comme un produit caoutchouteux, qui se comporte au-dessus d'une pression P₁, en fonction de la pression, comme un liquide, procédé dans lequel de préférence la pression P₁ est plus grande que 50 bars.

4. Procédé selon au moins une des revendications précédentes,
caractérisé en ce que
le godet en forme de cylindre creux permanent (ébauche de compact) (28) s'appuie sur sa surface de fond du côté extérieur, jusqu'à ce que le noyau (14) a été éloigné de la surface intérieure par rapport à la face interne de sa surface de fond.

5. Procédé de fabrication d'un godet (28) en forme de cylindre creux fermé d'un côté, en oxyde d'aluminium β", comme électrolyte solide pour en particulier une batterie sodium/soufre, procédé dans lequel un mélange de poudres est rempli dans un espace intermédiaire (24), entre une cavité (13) d'une matrice (10) et un noyau (14) saillant dans celui-ci, définissant le godet, puis est pressé et après évacuation de la matrice est fritté, procédé dans lequel un mélange de poudres contenant au moins Al₂ O₃ et Na₂CO₃ est homogénéisé, calciné, broyé et ensuite est rempli dans l'espace intermédiaire (24),
caractérisé en ce que
le mélange de poudres est compacté axialement et radialement de l'intérieur vers l'extérieur d'une manière essentiellement isotrope, en ce qu'après enlèvement du noyau, la matrice est débarrassée du mélange formé comme ébauche de compact, et en ce que finalement, l'ébauche de compact est frittée.

6. Procédé selon au moins une des revendications précédentes,
caractérisé en ce que
le mélange de poudres est pressé avec une pression P2 avec 80 MPa ≤P₂ ≤ 300 MPa.

7. Procédé selon au moins une des revendications précédentes
caractérisé en ce que
l'ébauche de compact est frittée à une température T1 avec T1≤1650°C.

8. Procédé selon au moins une des revendications précédentes,
caractérisé en ce que
le mélange de poudres est en premier lieu broyé à l'état humide, puis séché et finalement à nouveau est broyé.

9. Dispositif pour la fabrication d'un godet (28) à partir d'un mélange de poudres d'oxydes de céramique, en particulier d'un solide en forme de cylindre creux fermé d'un côté en oxyde d'aluminium β" (Al₂ O₃ -β"), en tant qu'électrolyte solide pour, en particulier, une batterie sodium/soufre, procédé dans lequel un mélange de poudres est capable d'être rempli dans l'espace intermédiaire (24) définissant le godet, formé entre une cavité (13) et une matrice (10) et un espace intermédiaire (24) formé dans ce noyau (14) qui fait saillie dans celui-ci et ensuite le mélange de poudres introduit dans l'espace intermédiaire est moulable par un déplacement relatif du noyau et de la matrice,
caractérisé en ce que
le noyau (14) est formé d'un matériau élastique qui se comporte au-dessus d'une pression P₁ en fonction de la pression, comme un liquide,
en ce que la matrice (10) entourant le noyau, à une certaine distance, est formée de plusieurs parties, ou possède un insert (12) en plusieurs parties entourant le noyau, faisant l'objet d'un espacement, et
en ce que le noyau se déplace par un poinçon (16) qui peut se déplacer dans une direction axiale de la cavité (13).

10. Dispositif selon la revendication 9,
caractérisé en ce que
le mélange de poudres est recouvert du côté externe par une plaque (23) se déplaçant vers par transmission de pression dans la cavité (13) et
en ce que du côté externe sur la plaque (23) est disposé sur une plaque (23) un élément de plaque (26) qui recouvre au moins par fractions la pièce de réduction (12).
